# EUROPEAN PATENT APPLICATION

(11) **EP 2 690 136 A1**
(43) Date of publication of application: **29.01.2014**
(21) Application number: 12177776.7
(22) Date of filing: 25.07.2012
(51) Int. Cl.: C08L 23/12, C08L 23/16, C08K 3/00

(54) **Thermoplastic elastomer compositions and process for preparing them**

(71) Applicant: Lanxess Elastomers B.V., 6167 AC Geleen (NL)
(72) Inventor: Dr. Van Duin, Martin, 6134 AC Sittard (NL)
(74) Representative: Herbold, Matthias

(57) **Abstract**

A thermoplastic elastomer compositions comprising a thermoplastic polymer, an elastomer component which is at least partially vulcanized with a phenolic resin, and a zeolite.

## Description

The invention relates to thermoplastic elastomer compositions comprising a thermoplastic polymer, an elastomer component which is at least partially vulcanized with a phenolic resin, and a zeolite, as well as a process for preparing them.

Dynamic vulcanization, in contrast to static vulcanization, embraces the curing of a rubber composition during its mixing or mastication, whereby one of the ingredients of this rubber composition is a thermoplastic resin. This process results in an elastomeric alloy material, called thermoplastic vulcanizate (TPV), as a category of thermoplastic elastomers (TPEs), with elastic and mechanical properties of a conventional thermoset rubber, but which processes in the melt as a convenional thermoplastic. Thus, TPVs are made of a rubber/thermoplastic polymer mixture in which the rubber phase is vulcanized. The thermoplastic phase of a TPV is commonly a polyolefin, in particular polypropylene and the rubber phase is often an ethylene-propylene-diene elastomer (EPDM). See, e.g., Handbook of Thermoplastic Elastomers, 2nd ed. (1988), Ch.4, B.M. Walker and C.P. Rader, eds., Van Nostrand Reinhold, New York.

Thermoplastic elastomer compositions consisting of blends of polyolefin resin and cured EPDM rubber are known from, e.g. US 4,130,535 and are said to have improved tensile strength.

US 4,311,628 discloses thermoplastic elastomer compositions, comprising blends of EPDM rubber and polyolefin resin, especially polypropylene (PP), in which the rubber is cured with phenolic resin in the presence of a cure activator, exhibiting improved compression set and oil resistance as compared with rubbers being cured with other curatives. Other references describe similar curing systems; see, e.g., US 4,594,390.

The manufacturing of PP/EPDM-based thermoplastic elastomers in which the rubber is cured by a phenolic resin in the presence of stannous chloride dehydrate (SnCl₂) as an activator is today considered as the conventional method and is most commonly used. Nevertheless, this method suffers from some considerable drawbacks, in particular the yellow colour of these products, the occurrence of undesired black specks in the thermoplastic vulcanizate compositions, the unpleasant odour of phenolic resin cured TPVs, and further discolouration upon use.

Alternative vulcanizing systems have been developed and some reached a commercial stage, in particular those using organic peroxides or hydrosiloxanes as crosslinking agents of the elastomeric component.

For example, EP-A-0436724 and EP-A-0574040 disclose partially vulcanized thermoplastic elastomer compositions in which an organic peroxide is used as crosslinking agent for the rubber component. A major drawback of using peroxides as vulcanizing agents is that they cause degradation of polypropylene and therefore they may result in low viscous products with inferior physical properties of the thermoplastic elastomers. In addition, the peroxide degradation products result in smell, blooming and fogging issues.

US 6,251,998 discloses the preparation of thermoplastic elastomers by hydrosilylation crosslinking of the elastomeric component. Such a vulcanizing system appears to require special ingredients in order to yield thermoplastic elastomers with desired properties. Such ingredients may be, for example, a special extender oil, a special deactivator, a special stabilizing agent, and the like.

It is an object of the present invention to provide TPVs to improve the drawbacks of the prior art, in particular the yellow colour shade of TPVs containing phenolic resin cured rubbers as well as the throughput rate for its manufaturing.

It was surprisingly found that the problem of the present invention can be resolved by thermoplastic elastomer compositions comprising a thermoplastic polymer, an elastomer component which is at least partially vulcanized with a phenolic resin, and a zeolite.

Such TPV compositions are remarkably less yellow coloured and show higher throughput rates and shorter mixing cycles respectively during its manufacturing by dynamically heat treatment.

### Thermoplastic resin:

A wide range of thermoplastic resins and/or their mixtures can be employed in the preparation of the thermoplastic elastomers compositions of the present invention. The thermoplastic resin preferably used in the composition of the present invention is a high-molecular weight solid obtained by polymerizing at least one kind of monoolefin preferably by means of either a high-pressure method or a low-pressure method. The resin, in particular the polypropylene may be isotactic or syndiotactic monoolefin polymer resins. Their typical resins are commercially available.

Examples of the olefins suitably used for preparing the thermoplastic resin include ethylene, propylene, 1-butene, 1-pentene, 1-hexene, 1-octene, 1-decene, 2-methyl-1-propene, 3-methyl-1-pentene, 4-methyl-1-pentene, 5-methyl-1-hexene, styrene, phenylensulfide, cyclic monoolefins and phenylenoxid. These olefins are used singly or in combination of two or more kinds.

Preferred thermoplastic resins are selected from the group consisting of polypropylene homopolymers or copolymers, polyethylene homopolymers like HDPE and LDPE, polyethylene copolymers like VLDPE and LLDPE, ethylene propylene copolymer thermoplastics, cyclic olefin homopolymers or copolymers as well as olefinic block copolymers, polystyrene, polyphenylene sulfide and polyphenylene oxide.

A preferred class of thermoplastic resins is the class of polypropylene homopolymers or copolymers. As used herein, the term polypropylene includes homopolymers of propylene as well as copolymers of polypropylene which preferably contain 1 to 20 wt % of ethylene or an α-olefin co-monomer of 4 to 20 carbon atoms, and mixtures thereof.

The resins are preferably crystalline form. Other thermoplastic resins which are substantially inert to the rubber and the phenolic resin curing system would also be suitable. Blends of thermoplastic resins may also be used.

The amount of thermoplastic resin found to provide useful compositions is generally from 10 to 90 weight percent, preferably from 20 to 80 weight percent, more preferably from 30 to 50 weight percent, based on the total weight of the thermoplastic resin and the elastomer.

Any polymerization process such as random polymerization process or block polymerization process may be adopted, as far as a resinous product is obtained. The thermoplastic resins may be used singly or in combination of two or more kinds. The thermoplastic resins used in the composition of the present invention desirably has a Melt Flow Index (MFI) preferably in the range of 0.1 to 50 dg/min, more preferably of 0.1 to 20 dg/min, in particular 0.1 to 5 dg/min, according to ISO norm 1133 (230°C; 2.16 kg load).

### Elastomer:

The elastomer according to the present invention before being vulcanized preferably contains unsaturated rubbers designated as R rubbers according to DIN/ISO 1629. These rubbers have an unsaturation in the main chain and might contain unsaturations in the side chain in addition to the unsaturated main chain.

They include, for example: Natural rubber (NR), Polyisoprene rubber (IR), Styrene-butadiene rubber (SBR), Polybutadiene rubber (BR), Nitrile rubber (NBR), Butyl rubber (IIR), Brominated isobutylene-isoprene copolymers preferably with bromine contents of 0.1 to 10 wt. % (BIIR), Chlorinated isobutylene-isoprene copolymers preferably with chlorine contents of 0.1 to 10 wt. % (CIIR), Hydrogenated or partially hydrogenated nitrile rubber (HNBR), Styrene-butadiene-acrylonitrile rubber (SNBR), Styrene-isoprene-butadiene rubber (SIBR) and Polychloroprene (CR) or mixtures thereof.

Elastomeric polymer should also be understood to include rubbers comprising a saturated main chain, which are designated as M rubbers according to ISO 1629 and might contain double bonds in the side chain in addition to the saturated main chain. These include for example ethylene propylene diene rubber (EPDM), chlorinated polyethylene CM and chlorosulfonated rubber CSM.

The elastomeric polymer of the above mentioned type in the rubber composition according to the present invention can naturally be modified by further functional groups. In particular, elastomeric polymers that are functionalized by hydroxyl, carboxyl, anhydride, amino, amido and/or epoxy groups are more preferred. Functional groups can be introduced directly during polymerization by means of copolymerization with suitable co-monomers or after polymerization by means of polymer modification.

In one preferred embodiment of the invention, the elastomeric polymer is Natural rubber (NR), Polybutadiene rubber (BR), Nitrile rubber (NBR), Hydrogenated or partially hydrogenated nitrile rubber (HNBR), Styrene-butadiene rubber (SBR), Styrene-isoprene-butadiene rubber (SIBR), Butyl rubber (IIR), Polychloroprene (CR), ethylene propylene diene rubber (EPDM) , chlorinated polyethylene (CM), chlorosulfonated rubber (CSM), Chlorinated isobutylene-isoprene copolymers, in particular with chlorine contents of 0.1 to 10 wt. % (CIIR), Brominated isobutylene-isoprene copolymers in particular with bromine contents of 0.1 to 10 wt. % (BIIR), Polyisoprene rubber (IR) or a mixture thereof.

In a further preferred embodiment of the invention, the elastomeric polymer comprises 1,1-disubstituted or 1,1,2-trisubstituted carbon-carbon double bonds. Such di- and trisubstituted structures react especially satisfactorily with a phenol formaldehyde resin cross-linker according to the invention.

The thermoplastic elastomer composition can comprise a blend of more than one of the above defined elastomeric polymers to be at least partially vulcanized.

The elastomeric polymer preferably has a Mooney viscosity (ML (1+4),125°C) in the range of 10 to 150 MU, particularly preferred of 30 to 80 MU (ISO 289-1:2005).

Preferred elastomeric polymers are copolymers of ethylene, one or more C₃ to C₂₃ α-olefins and a polyene monomer. Copolymers of ethylene, propylene and a polyene monomer are most preferred (EPDM). Other α-olefins suitable to form a copolymer include 1-butene, 1-pentene, 1-hexene, 1-octene and styrene, branched chain α - olefins such as 4-methylbut-1-ene, 5-methylpent-1-ene , 6-methylhept-1-ene, or mixtures of said α-olefins.

The polyene monomer may be selected from non-conjugated dienes and trienes. The copolymerization of diene or triene monomers allows introduction of one or more unsaturated bonds.

The non-conjugated diene monomer preferably has from 5 to 14 carbon atoms. Preferably, the diene monomer is characterized by the presence of a vinyl or norbornene group in its structure and can include cyclic and bicyclo compounds. Representative diene monomers include 1,4-hexadiene, 1,4-cyclohexadiene, 1,5-hexadiene, 1,6-heptadiene, 1,7-octadiene, dicyclopentadiene, 5-ethylidene-2-norbornene, 5-vinyl-2-norbornene, 5-methylene-2-norbornene, 1,5-heptadiene, and 1,6-octadiene. The copolymer may comprise a mixture of more than one diene monomer. Preferred non-conjugated diene monomers for preparing a copolymer are 1,4-hexadiene (HD), dicyclopentadiene (DCPD), 5-ethylidene-2-norbornene (ENB) and 5-vinyl-2-norbornene (VNB). ENB is the most preferred polyene.

The triene monomer will have at least two non-conjugated double bonds, and up to about 30 carbon atoms. Typical triene monomers useful in the copolymer of the invention are 1-isopropylidene-3,4,7,7-tetrahydroindene, 1-isopropylidene-dicyclopentadiene, dihydro-isodicyclopentadiene, 2-(2-methylene-4-methyl-3-pentenyl) [2.2.1] bicyclo-5-heptene, 5,9-dimethyl-1,4,8-decatriene, 6,10-dimethyl-1,5,9-undecatriene, 4-ethylidene-6,7-dimethyl-1,6-octadiene and 3,4,8-trimethyl-1,4,7-nonatriene.

Ethylene-propylene or higher α-olefin copolymers preferably comprise about 10 to 90 wt.%, preferably 30 to 90 wt.%, more preferably 40 to 80 wt%, in particular 45 to 75 wt.% ethylene derived units, 0.01 to 20 wt.%, preferably 0.5 to 15 wt.%, or more preferably 1 to 10 wt.% polyene-derived units , wherein the balance to 100 wt.% is the amount of the C₃ to C₂₃ α -olefin derived units.

A preferred elastomer is an ethylene α-olefin diene rubber obtainable by random copolymerization of ethylene, an α-olefin having 2 to 23 carbon atoms, in particular propylene and a diene selected from the group consisting of 1,4-hexadiene (HD), dicyclopentadiene (DCPD), 5-ethylidene-2-norbornene (ENB) and 5-vinyl-2-norbornene (VNB), in particular ENB or VNB or ENB and VNB.

Strong preferred elastomer is an ethylene propylene diene rubber co-polymerized by 45 to 75 wt.% of ethylene, 1 to 10 wt.% diene, in particular ENB, and the balance is propylene.

Another preferred elastomeric polymer in the present invention is butyl rubber which is the type of synthetic rubber made by copolymerizing an iso-olefin with a minor proportion of a polyene having from 4 to 14 carbon atoms per molecule. The iso-olefins generally have from 4 to 7 carbon atoms, and such iso-olefins as isobutylene or ethyl methyl ethylene are preferred. The polyene usually is an aliphatic conjugated diolefin having from 4 to 6 carbon atoms, and is preferably isoprene or butadiene. Other suitable diolefins that may be mentioned are such compounds as piperylene; 2,3-dimethyl butadiene-1,3; 1,2-dimethyl butadiene-1,3; 1,3-dimethyl butadiene-1,3; 1-methyl butadiene-1,3 and 1,4-dimethyl butadiene-1,3. The butyl rubber contains only relatively small mounts of copolymerized diene, typically about 0.5 to 5 wt.%, and seldom more than 10 wt.%, on the total weight of the elastomer. For the sake of convenience and brevity, the various possible synthetic rubbers within this class will be designated generally by the term butyl rubber.

Further preferred elastomeric polymer in the present invention are especially natural rubber and its synthetic counterpart polyisoprene rubber.

The elastomer, in particular EPDM is usually and conveniently prepared using a Ziegler-Natta catalyst, a metallocene catalyst or other single site catalysts. In preparing the compositions of the invention, the amount of elastomer preferably is 90 to 10 weight percent, preferably 80 to 20 weight percent, more preferably 50 to 30 weight percent based on the total weight of the elastomer and the thermoplastic resin.

### Phenolic resin:

The term phenol formaldehyde resin cross-linker, phenolic resin, resin cross-linker or resol have identical meanings within this application and denote a phenol and formaldehyde based condensation product used as curing agent.

Further are the terms cross-linking, curing and vulcanizing used with a singular meaning and are fully interchangeable words in the context of the present application, all expressing the thermosetting or fixation of a polymeric network by generation of covalent bonds between the rubber chains or its pedant groups.

Suitable examples, of phenol derivatives include alkylated phenols, cresols, bisphenol A, resorcinol, melamine and formaldehyde, particularly in capped form as paraformaldehyde and as hexamethylene tetramine, as well as higher aldehydes, such as butyraldehyde, benzaldehyde, salicylaldehyde, acrolein, crotonaldehyde, acetaldehyde, glyoxilic acid, glyoxilic esters and glyoxal.

Phenolic resins based on alkylated phenol and/or resorcinol and formaldehyde are particularly suitable.

Examples of suitable phenolic resins are octyl-phenol formaldehyde curing resins. Commercial resins of this kind are for example Ribetak R7530E, delivered by Arkema, or SP1 045, delivered by SI Group.

In another preferred embodiment of the invention the phenol formaldehyde resin is halogenated. Such halogenated resin represents the combined functionality of above phenolic resin and above halogenated organic compound. Preferred are brominated phenolic resins. A Commercial resin of this kind is for example SP1055 (delivered by Sl Group).

The elastomer is at least partially vulcanized. As is generally known in the art the degree of vulcanization is often expressed in xylene gel content. The method is described in US 5,100,947. Preferably, the elastomer of the thermoplastic elastomer composition is vulcanized to a rubber gel content higher than 70%, more preferably higher than 90%, even more preferably higher than 95%. Most preferably the rubber is cured to a gel content of at least 98%. Compositions in which the rubber component is only partially phenolic resin vulcanized, i.e. below about 50%, are also encompassed within the present invention and can be used, for example, for less demanding applications.

### Zeolite:

The zeolite as contained in the thermoplastic elastomer composition of the present invention may be those natural or synthetic crystalline alumina-silicate microporous materials having a three-dimensional porous structure. The zeolites can be clearly distinguished by their chemical composition and crystalline structure as determined by X-ray diffraction patterns. Zeolite has already been used in resol cured rubbers for accelerating the curing rates as mentioned in EP2441798.
Possible zeolites are already mentioned in Kirk-Othmer Encyclopedia of Chemical Technology.

Due to the presence of alumina, zeolites exhibit a negatively charged framework, which is counter-balanced by positive cations. These cations can be exchanged affecting pore size and adsorption characteristics. Preferably are the potassium, sodium and calcium forms of zeolite A types having pore openings of approximately 2 to 10 Angstrom, in particular approximately 3, 4 and 5 Angstrom respectively. Consequently they are called Zeolite 3A, 4A and 5A. The metal cation might also be ion exchanged with protons.

Further not limiting examples of synthetic zeolites are the zeolite X types and zeolite Y types which are well known to the man skilled in the art. Not limiting examples for naturally occurring zeolites are mordenite, faujasite and erionite.

The amount of zeolite in the thermoplastic elastomer composition preferably is 0.1 to 100 phr, more preferred 0.1 to 50, most preferred 0.5 to 20 phr based on the elastomer.

### Further components:

The thermoplastic elastomer composition according to the invention may further contain conventional additives, which can be introduced into the composition in the thermoplastic resin, the rubber, or in the blend either before, during or after the vulcanization. Examples of such additives include scorch retardants, antioxidants, heat stabilizers, processing aids, like a platicizer, reinforcing and non-reinforcing fillers, pigments, waxes, antiblocking agents, antistatic agents, ultraviolet stabilizers, plasticizers (including esters), foaming agents, flame retardants and other additives known in the rubber compounding art, for example described in the Rubber World Magazine Blue Book. Such additives may comprise from about 0.1 to about 300 phr.

The rubber composition prepared according to the invention may also comprise polymers other than the above described elastomeric polymer. Such polymers other than the elastomeric polymer include, polyethylene, polypropylene, propylene ethylene rubber (EPM), copolymers of ethylene and butylene, hexylene or octylen, acrylic polymer (e.g. poly(meta)acrylic acid alkyl ester, etc.), polyvinyl chloride, ethylene-vinyl acetate copolymers, polyvinyl acetate, polyamide, polyester, chlorinated polyethylene, urethane polymers, styrene polymers, silicone polymers, styrene-ethylene-butylen styrene block copolymers (SEBS), and epoxy resins.

The ratio of the these polymers other than the "elastomers" to the "elastomers" can be 1.0 or less, preferably 0.66 or less.

If as elastomers EPDM is used then as further rubber EPM is preferred.

The olefin thermoplastic elastomer composition of the invention may contain 0 to 75 wt. % of a plasticizer, more preferably 25 to 60 wt.%, in particular 30 to 50 wt.%, based on the total amount of the thermoplastic resin, the elastomer and the plasticizer. As plasticizer, those conventionally used for rubbers are employable.

Examples of such plasticizers include: petroleum type materials, such as process oil, lubricating oil, paraffin, liquid paraffin, petroleum asphalt and vaseline; coal tars, such as coal tar and coal tar pitch; white oil, naphthenic oil, hydrogenated oil, fatty oils, such as castor oil, linseed oil, rapeseed oil, soybean oil and coconut oil; waxes, such as tall oil, beeswax, carnauba wax and lanolin; fatty acids and metallic salts thereof, such as ricinolic acid, palmitic acid, stearic acid, barium stearate and calcium stearate; synthetic polymer materials, such as petroleum resin, coumarone-indene resin and atactic polypropylene; ester type plasticizers, such as dioctyl phthalate, dioctyl adipate and dioctyl sebacate; and other plasticizers, such as microcrystalline wax, factice, liquid polybutadiene, modified liquid polybutadiene and liquid thiokol.

The olefin thermoplastic elastomer composition of the invention may contain 2 to 100, preferably 2 to 50 parts by weight of an inorganic filler, based on 100 parts by weight of the total amount of the thermoplastic resin and the elastomer.

Examples of an preferably inorganic filler employable in the invention include calcium silicate, clay, kaolin, talc, silica, diatomaceous earth, mica powder, asbestos, alumina, barium sulfate, aluminum sulfate, calcium sulfate, molybdenum disulfide, graphite, glass fiber, glass balloon, Shirasu balloon, calcium titanate whisker, aluminum borate whisker, carbonanotubes, graphene, layered nano silicate, titanium dioxide and carbon black.

Additives, fillers or other compounds should not interfere - or only to a very limited extent - with the crosslinking system of the thermoplastic elastomer composition of the present invention.

It shall be noted that the thermoplastic elastomer composition of the present invention may contain further components that might have been used during its manufacturing process as will be described below. Preferably the composition does contain stannous and optionally zinc.

### Process

The present invention also relates to a process for the preparation of the thermoplastic elastomer compositions described above by melt mixing a thermoplastic resin and an elastomer and at least partially vulcanizing the elastomer in the presence of a phenolic resin and zeolite, preferably activated zeolite.

The preparation can for example conveniently be effected by dynamic vulcanization - also called as "dynamic heat treatment" - of a mixture typically containing the thermoplastic resin polypropylene, preferably polypropylene (PP) and the elastomer, preferably EPDM, by feeding the thermoplastic resin and the elastomer either in separate streams or in the form of a dry blend to a mixing and kneading apparatus, such as an internal mixer or a twin-screw extruder. In the mixing and kneading apparatus heating is effected to above the thermoplastic resin's softening point, usually to above the thermoplastic resin's melting point.

In the context of the present application, the terminology "activated zeolite" reflects that the zeolite is **characterized in that** the pores are substantially free of readily adsorbed molecules. Substantially free means that the zeolite preferably comprises 0 to 1 wt.% of adsorbed molecules, more preferably 0 to 0.5 wt.%, most preferably 0 to 0.1 wt.%, based on the amount of zeolite. Typical examples for such readily absorbed molecules are low molecular weight polar compounds or hydrocarbons. The zeolite may comprise water molecules in form of moisture as mentioned below. Adsorption of such molecules will result in a deactivated zeolite.

An activated zeolite as defined above is obtained by subjection to a temperature and/or low pressure treatment such to substantially decompose and/or remove components from its pores. In a preferred embodiment activated zeolite is obtained by subjection to a temperature preferably of at least 170 °C and low pressure treatment, in particular at a pressure of less than 300 mm Hg, in particular by treating a zeolite at least 8 hours, preferably at least 12 hours, in particular at least 24 hours at a temperature of at least 170°C at a pressure of less than 300 mm Hg, in particular less than 50 mm Hg, preferably less than 15 mm. The zeolite to be activated is already described above. An activated zeolite with a good activity can be obtained by a treatment of a commercially available zeolite, in particular a zeolite 5A in powder form at 180 °C and 10 mm Hg for 48 hours. A treatment may also consist of storing the zeolite for a period of 24 hours at 200°C and at reduced pressure, whereby the preferred pressure is identified by the above given ranges. Such activation process of zeolites is well known to the person skilled in the art for producing a zeolite suited as a drying agent.

Deactivation of the zeolite may proceed by diffusion of compounds such as for example water, hydrocarbons, acids or bases into the pores of the zeolite and driving out the potentially present inert gasses.

Deliberate deactivation of the zeolite is for example known from the temporary or permanent immobilization of catalysts in which case the zeolite assumes the role of a carrier material. Accidental deactivation of the zeolite will take place if the activated zeolite is exposed to the environment from which it will absorb moisture and/or other compounds. It should be recognized that unintended deactivation by moisture is difficult to avoid in a rubber processing environment where the composition of the present invention is mainly used and, in consequence, a significant deactivation of the activated zeolite especially by moisture is considered to fall under the scope of the present invention. Such deactivation of the zeolite comprised in the composition according to the invention by moisture might reach levels of 75%, preferably less than 50%, more preferably less than 25% of the maximum moisture deactivation under ambient conditions. Whereas moisture deactivation might be tolerated to a large extent the loading of the activated zeolite comprised in the composition of the present invention by compounds other than water is less than 5 wt%, preferably less than 3 wt%, more preferably less than 1 wt% compared to the activated zeolite.

US 3,036,986 describes a method for accelerating the curing reaction of a butyl rubber formulation by use of a strong acid. Said strong acid is introduced into the formulation while contained within the pores of a crystalline, zeolitic molecular sieve adsorbent at loading levels of at least 5 wt.%.

The preferably activated zeolite might be added to the composition in form of fine powders or as an aggregated dispersible particles. To achieve the good dispersion of the activated zeolite, the zeolite is preferably in the form of fine, small, dispersible particles that might be aggregated into larger agglomerates or processed into pellets. Generally the dispersed average particle size is in the range of 0.1 - 200 µm and more preferably the zeolite has an average particle size of 0.2 - 50 µm.

The rubber composition can comprise a blend of more than one of the above defined zeolites, preferably activated zeolite.

The amount of preferably activated zeolite used in the process according to the invention depends on the required cure rate increasing effect, but also on the type of zeolite used, its pore size and level of deactivation. Preferably the level of preferably activated zeolite is from 0.1 to 100 phr (parts per hundred parts rubber), in particular 0.1 to 50 phr, more preferably from 0.5 to 20 phr and most preferred from 1 to 15 phr. If more than one preferably activated zeolite is employed, the amount of preferably activated zeolite mentioned before relates to the sum of the preferably activated zeolites employed.

The zeolites as such are already defined above. The preferably activated zeolite might be added during the process in form of fine powders or as an aggregated dispersible particles. To achieve the good dispersion of the activated zeolite, the activated zeolite is preferably in the form of fine, small, dispersible particles that might be aggregated into larger agglomerates or processed into pellets. Generally the dispersed average particle size is in the range of 0.1 - 200 µm and more preferably the zeolite has an average particle size of 0.2 - 50 µm. This results in a large number of well dispersed sites within the vulcanizable rubber composition providing the highest effect in increasing cure rate of the vulcanizable rubber composition and will not negatively affect surface quality of the shaped and vulcanized article.

It is also possible for the vulcanizing system to be present in the mixture already from the beginning of the mixing and kneading process, and for vulcanization to be initiated after the temperature has risen sufficiently.

The activated zeolite may also be added together with the phenolic resin to the mixture of the thermoplastic resin and the elastomers. Preferably it is added before the dynamic vulcanisation is started, more preferably even before the phenolic resin vulcanisation system is added.

A frequently used vulcanization temperature is between the melting point of the thermoplastic resin (165 °C in the case of polypropylene) and 325 °C. In internal mixers the temperature typically ranges between 170 and 230 °C, in extruders typically between 200 and 300 °C. The vulcanization time is typically between 0.25 and 10 minutes. It is preferred that the mixture be kneaded during the vulcanization, to ensure that the TPV can be processed as a thermoplastic material. It is preferred for the TPV to be vulcanized to rubber gel content, either determined using xylene or cyclohexane as solvent as mentioned above, preferably of at least 95%, preferably at least 98%.

The plasticizer as well as the filler like other above defined further components may already have been mixed with the not yet vulcanized elastomer that is added to the kneader. Preferably the elastomer used does already contain the plasticizer, in particular it is oil-modified. It is also possible to separately add all or part of the plasticizer during the kneading process. Fillers and additives may be added before, during or after vulcanization. If fillers or additives have an adverse effect on the vulcanization process or have limited thermal stability, they are of course preferably added after vulcanization.

The melt mixing is generally carried out in conventional mixing equipment, for example roll mills, internal mixers, continuous mixers for example a single screw extruder, a twin screw extruder and the like. Preferably melt mixing is carried out in a twin screw extruder. The thermoplastic resin, the elastomer, the optionally used plasticizer and the phenolic resin are as described above.

Good results are obtained if 0.1 - 20 parts by weight of a phenolic resin cross-linker are present per 100 parts by weight of elastomeric polymer. Preferably 0.2 - 10 parts by weight, more preferably 0.25 - 5 parts by weight, in particular 0.5 to 3.5 parts by weight of a phenolic resin cross-linker per 100 parts by weight of elastomeric polymer are present. If more than one phenol formaldehyde resin cross-linker is employed, the amount of phenolic resin cross-linker mentioned before relates to the sum of the phenolic resin cross-linkers employed. It is preferred that a sufficient amount of curing agent is present.

While the inherent cure rate of the phenolic resin as such might be sufficient for some applications, commercial practical vulcanizable rubber compositions will preferably further comprise an activator package comprising one or more activators or catalysts to work in conjunction with the phenolic resin. The primary function of an activator in a vulcanizable rubber composition is to increase the rate of curing. Such agents may also affect the cross-lining density and corresponding physical properties of the vulcanized rubber composition so that any accelerator additive should tend to improve such properties.

In a preferred embodiment of the process the vulcanization is done in the presence of at least one acid. Preferred acids are organic acids or inorganic acids. The latter preferably is a metal halide, in particular heavy metal halide.

The metal halide activators of the invention are exemplified by such known stable acidic halides as tin chloride, zinc chloride, aluminum chloride and, in general, halides of the various metals of group 3 or higher of the periodic system of elements. This class includes, inter alia, ferrous chloride, chromium chloride and nickel chloride, as well as cobalt chloride, manganese chloride and copper chloride. The metal chlorides constitute a preferred class of accelerators in the composition of the invention. However, activation is obtainable with metal salts of other halides such as aluminum bromide and stannic iodide. Metal fluorides such as aluminum fluoride can accelerate, although aluminum fluoride is not particularly desirable. Of the metal chlorides, the most preferred are those of tin, zinc and aluminum.

The heavy metal halides are effective independently of the state of oxidation of the metal, and they are even effective if the halide is partially hydrolyzed, or is only a partial halide, as in zinc oxychloride.

In the case that metal halides are used in combination with the phenolic resin, good results are obtained if 0.1 to 10 parts by weight of a metal halide are present per 100 parts by weight of elastomers. Preferably, 0.1 to 5 parts by weight, more preferably 0.25 to 3 parts by weight, in particular 0.5 to 2 parts by weight of a metal halide per 100 parts by weight of elastomers are present. If more than one metal halide is employed, the amount of metal halide mentioned before relates to the sum of the metal halides employed.

In order to improve the preparation of the rubber composition, it is desirable that the metal halide is further coordinated with complexating agents such as water, alcohols and ethers. Such complexed metal halides have improved solubility and dispersability in the rubber compositions. Preferably the metal halides can be present in the form of its hydrates, for instance SnCl₂ x 2H₂O.

In another preferred embodiment of the process the vulcanization is done in the presence of at least one halogenated organic compound. Preferably then a metal oxide as will be defined below will be present during the vulcanization, in particular ZnO. In such a case the vulcanization is preferably made without the addition of SnCl₂, in particular without the addition of heavy metal halides. This also applies if a halogenated rubber is used as elastomer like CR or a halogenated phenolic resin is used.

Suitable halogenated organic compounds are those compounds from which hydrogen halide is split off in the presence of a metal compound.

Halogenated organic compounds include, for example, polymers or copolymers of vinyl chloride and/or vinylidene chloride other polymerizable compounds, halogen containing plastics, for example polychloroprene; halogenated, for example chlorinated or brominated butyl rubber; halogenated or chlorosulphonated products of high-density or low-density polyethylene or higher polyolefins; colloidal mixtures of polyvinyl chloride with an acrylonitrile-butadiene copolymer; halogenated hydrocarbons containing halogen atoms which may be split off or which may split off hydrogen halide, for example liquid or solid chlorination products of paraffinic hydrocarbons of natural or synthetic origin; halogen containing factice, chlorinated acetic acids; acid halides, for example lauroyl, oleyl, stearyl or benzoyl chlorides or bromides, or compounds such as for example N-bromosuccinimide or N-bromo-phthalimide.

In the case that halogenated organic compounds are used, good results are obtained if 1 to 20 parts by weight of halogenated organic compounds are present per 100 parts by weight of elastomeric polymer. Preferably, 2 to 10 parts by weight, more preferably 3 to 7 parts by weight of halogenated organic compounds per 100 parts by weight of elastomeric polymer are present. If more than one halogenated organic compound is employed, the amount of halogenated organic compound mentioned before relates to the sum of the halogenated organic compounds employed.

In another embodiment of the invention the vulcanization is preferably done in the presence of at least one heavy metal oxide used as an activator. In the context of the present invention a heavy metal is considered to be a metal with an atomic weight of at least 46 g/mol. Preferably the heavy metal oxide is zinc oxide, lead oxide or stannous oxide, more preferably zinc oxide.

Such heavy metal oxide is recognized to be especially useful in combination with the above mentioned halogenated organic compound and/or halogenated phenolic resin. A further advantage described in the experiments of the present application is the moderation of the cure rate, e.g. scorch retardant, and the stabilization of the vulcanized compounds against thermal aging.

In a preferred embodiment of the invention, the vulcanization is preferably done in the presence of zinc oxide.

Vulcanization is carried out by the phenolic resin. The phenolic resin is added to the mixture, preferably together with an acid, like SnCl₂ and/or a metal oxide, like ZnO as will be defined below.

An advantage of the heavy metal oxide in the composition according to the present invention is an improved heat aging performance of the vulcanized rubber composition reflected by the retention of tensile properties after heat aging.

In the case that heavy metal oxides are given to the vulcanization mixture, good results are obtained with from 0.1 - 10 parts by weight of heavy metal oxide per 100 parts by weight of elastomeric polymer. Preferably with 0.5 - 5 parts by weight, more preferably with 2 - 4 parts by weight of heavy metal oxide per 100 parts by weight of elastomeric polymer. If more than one heavy metal oxide is employed, the amount of heavy metal oxide mentioned before relates to the sum of the heavy metal oxides employed. With a sufficient amount of heavy metal oxide, good scorch time and good thermal stability of the vulcanized compound are achieved.

Preferably the vulcanization is carried out in the presence of stannous chloride and zinc oxide. These activators may be added together or separately before or after the addition of the phenolic resin.

The present invention also relates to articles comprising a thermoplastic elastomer composition according to the present invention. Such composition may be shaped into articles, for example by extrusion, injection moulding or blow moulding.

The thermoplastic elastomer composition as well as the articles comprising it provide a good surface quality. By "good surface quality" is especially meant a good appearance. The articles have less colour, show less discoloration upon use and show less black specks, compared to commercially available phenolic resin cured TPVs. In addition the throughput of the TPV by manufacturing of the thermoplastic elastomer composition in a dynamic vulcanization is higher compared to conventional TPVs. Typical applications include automotive sealings, window profiles and soft-touch applications.

The invention will be further illustrated by the following non-limiting examples and comparative experiments.

### Examples

The thermoplastic elastomer compositions according to the present invention were prepared using the following basic recipe: EPDM rubber 100 phr, polypropylene resin 64 phr, oil 137 phr, talc 30 phr, zinc oxide 1.8 phr and Irganox® 1076 (antoxoidant) 0.9 phr. The phenolic curative systems are listed in Table 1 below to complete the compositions.

Comparison Example 2 in Table 1 corresponds to a TPV composition which is representative for phenolic resin vulcanized TPVs commercially available today in industry.

All dynamic vulcanizations were conducted on a 50 ml Brabender Plasticorder PLE 330 batch kneader.

The general procedure for producing the thermoplastic elastomers according to the invention is described below:

### Brabender Plasticorder PLE 330 (volume 50 ml)

- The total weight of each of the compositions was 35 g; the temperature of the kneading chamber 170°C; and the initial rotor speed 50 rpm.
- The components were added in sequential order and after melting of the polypropylene resin (PP; Moplen HP 556E), Irganox® 1076 was added as stabilizer.
- The activated zeolite as used in the following examples was obtained by the treating of zeolite 5A (Acros Organics) in powder form (having an average particle size of 50 µm) in a vacuum oven for 48 hours at a temperature of 180°C and a pressure of about 10 mm Hg
- EPDM rubber (Keltan 5531A from LANXESS; 50% oil-extended) was added, followed by ZnO, talc and activated zeolite and a homogenous melt was then formed. The rotor speed was increased to 80 rpm.
- White Oil was added gradually while avoiding overlubrification.
- The phenolic resin crosslinker (octylphenol formaldehyde resin; Ribetak 7530) and 1.5 phr SnCl₂ x2H₂O were added sequentially and the temperature was adjusted to 210°C.
- Kneading was continued and a temperature of 210°C was reached in about 5 minutes. Typically, the mixer torque starts to increase upon SnCl₂ addition, goes through a maximum value and then decreases to a lower plato value. The maximum in torque is usually interpreted as the moment where the rate of dynamic vulcanization is maximum. The normalized time of the torque maximum is defined as the difference in time between the initial torque increase due to SnCl₂ addition and the torque maximum.
- The kneading was stopped and the kneading chamber emptied.
- The hot TPV is cooled in air on an aluminium tray.
- Test plaques of 1 and 6 mm thickness were prepared by compression moulding of the TPV products between Teflon and aluminum films in a Fonteyne press at 210 °C (180 kN). The samples are cooled to 30 °C in the press under pressure.

### Determination of network density by swelling in cyclohexane

- Half of a pressed sheet (50 x 25 x 1 mm) is weighed and then immersed in cyclohexane for 48 h under gentle stirring. Cyclohexane is refreshed after 48 h.
- The weight of the swollen sample is measured in a sealed glass bottle after the sheet is carefully wiped off by a tissue.
- After drying in a vacuum oven at 100°C for 5 h with nitrogen purging the dry weight is determined.
- If applicable, the cyclohexane gel content and the equilibrium swelling degree are calculated.
- The overall crosslink density is calculated using the Flory-Rehner equation.

The rubber gel content so determined was for all examples of the present in invention higher than 95%.

### Properties of the TPVs

The following properties of the thermoplastic vulcanizates of the invention were analyzed on compression moulded samples.
- Tensile strength (MPa), elongation at break (%) and moduli at 100% and 300% according to ISO 37 using 1 mm thick dumb-bell 3 samples
- Hardness (ShA) according to DIN 53505 using 6 mm thick samples
- Compression sets at various temperatures (22h) according to ISO 815 using 6 mm samples
- Colour: visual inspection and L,a,b colour measurement according to ISO 7724-1-2-3; L indicates the whiteness of a sample with 100 and 0 corresponding to white and black, respectively. a represents the red-green range with positive values indicating red and negative values green and zero representing absence of red/green. b represents the yellow-blue range with positive values indicating yellow and negative values blue and zero representing absence of yellow/blue.

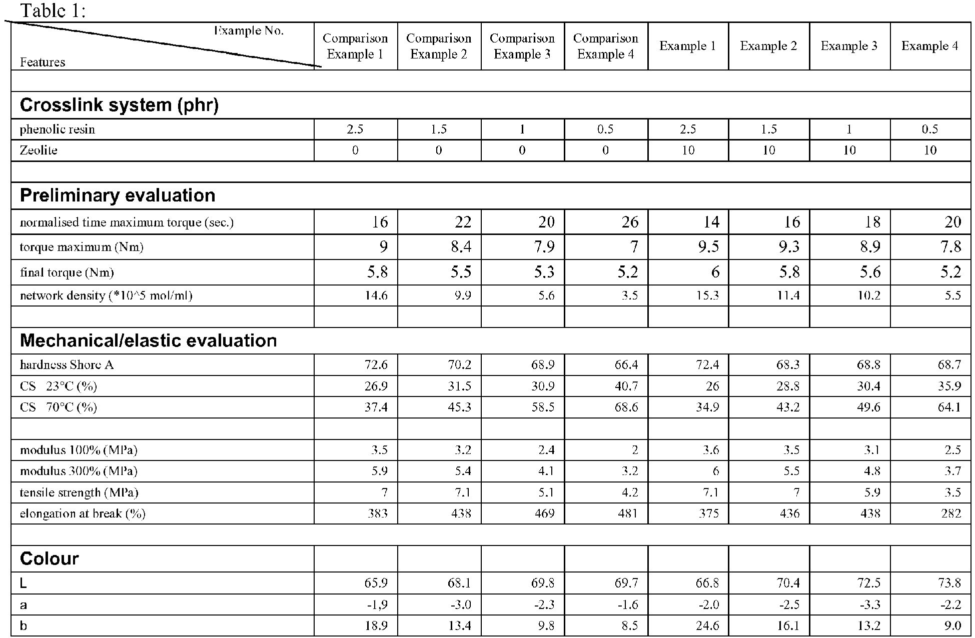

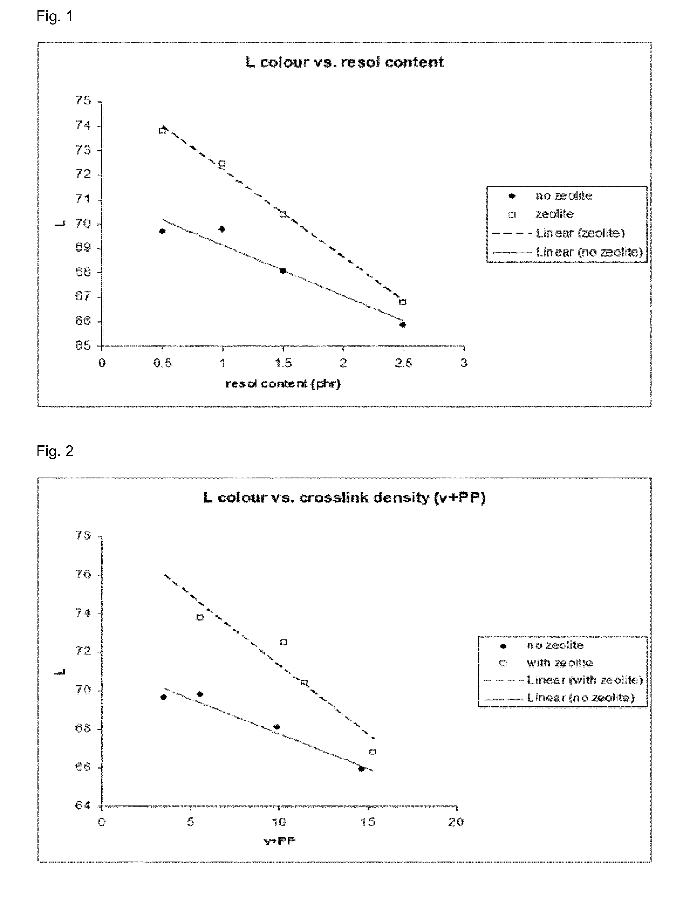

As can be seen for Fig. 1 the yellow shade of the TPV can be substantially reduced by the compositions of the present invention.

In addition the yellow colour is reduced substantially at a given cross linking density by the features of the present invention. That means that for a selected level of crosslink density and therewith corresponding physical properties the colour characteristics of the TPVs produced in the presence of zeolite are superior to those produced in the absence of zeolite as can be seen from Fig. 2.

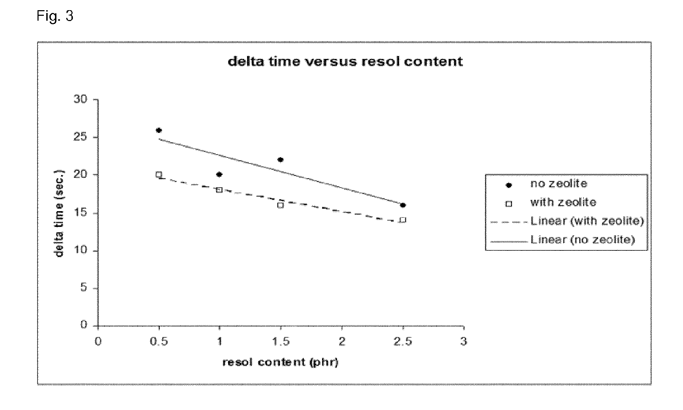

As can be seen from Fig. 3 the 4t vs. resin plot shows that 4t can be reduced substantially which leads to shorter mixing cycles during the manufacturing of the TPV, whereby 4t means the difference in seconds of the time where the max. torque occurs and the time where the torque starts to increase due to initiated curing.

## Claims

1. A thermoplastic elastomer compositions comprising a thermoplastic polymer, an elastomer component which is at least partially vulcanized with a phenolic resin, and a zeolite.

2. The composition according to claim 1, wherein the thermoplastic resin is selected from the group consisting of polypropylene homopolymers or copolymers, polyethylene homopolymers, like HDPE and LDPE, polyethylene copolymers, like VLDPE and LLDPE, ethylene propylene copolymer thermoplastics, cyclic olefin homopolymers or copolymers as well as olefinic block copolymers, polystyrene, polyphenylene sulfide and polyphenylene oxide.

3. A composition according to claim 1, wherein the thermoplastic resin is a polypropylene homopolymer or copolymer.

4. The composition according to any one of claims 1 to 3, wherein the elastomer is selected from the group consisting of Natural rubber (NR), Polyisoprene rubber (IR), Styrene-butadiene rubber (SBR), Polybutadiene rubber (BR), Nitrile rubber (NBR), Butyl rubber (IIR), Brominated isobutylene-isoprene copolymers preferably with bromine contents of 0.1 to 10 wt. % (BIIR), Chlorinated isobutylene-isoprene copolymers preferably with chlorine contents of 0.1 to 10 wt. % (CIIR), Hydrogenated or partially hydrogenated nitrile rubber (HNBR), Styrene-butadiene-acrylonitrile rubber (SNBR), Styrene-isoprene-butadiene rubber (SIBR), ethylene-α-olefin-polyene rubber and Polychloroprene (CR) or mixtures thereof

5. The composition according to any one of claims 1 to 4, wherein the elastomer is an ethylene α-olefin polyene rubber.

6. The composition according to any one of claims 1 to 5, wherein the elastomer is an ethylene α-olefin polyene rubber obtainable by random copolymerization of ethylene, an α-olefin having 2 to 23 carbon atoms and a polyene selected from the group consisting of 1,4-hexadiene (HD), dicyclopentadiene (DCPD), 5-ethylidene-2-norbornene (ENB) and 5-vinyl-2-norbornene (VNB).

7. The composition according to any one of claims 1 to 6, wherein the elastomer is an ethylene propylene diene rubber (EPDM) co-polymerized by 45 to 75 wt.% of ethylene, 1 to 10 wt.% diene, in particular ENB, and the balance is propylene.

8. The composition according to at least one of the claims 1 to 7, wherein the amount of thermoplastic resin is from 10 to 90 weight percent, preferably from 20 to 80 weight percent, more preferably from 30 to 50 weight percent, based on the total weight of the thermoplastic resin and the elastomer.

9. The composition according to at least one of the claims 1 to 8, wherein the amount of the elastomer, in particular EPDM is 90 to 10 weight percent, preferably 80 to 20 weight percent, more preferably 50 to 30 weight percent based on the total weight of the elastomer and the thermoplastic resin.

10. The composition according to at least one of the claims 1 to 8, wherein the gel content of the thermoplastic elastomer composition is higher than 70%, more preferably higher than 90%, even more preferably higher than 95%.

11. The composition according to at least one of the claims 1 to 10, wherein the amount of zeolite in the thermoplastic elastomer composition is 0.1 to 100 phr, more preferred 0.1 to 50, most preferred 0.5 to 20 phr based on the elastomer.

12. The composition to at least one of the claims 1 to 11 that in addition contains at least one plasticizer.

13. The composition to at least one of the claims 1 to 12 that in addition contains at least one inorganic filler.

14. Process for the preparation of the thermoplastic elastomer composition according to at least one of claims 1 to 13 by melt mixing a thermoplastic resin and an elastomer and at least partially vulcanizing the elastomer in the presence of a phenolic resin and a zeolite.

15. Process for the preparation of the thermoplastic elastomer composition according to claim 13 where in the zeolite is activated by. subjection of zeolite to a temperature of at least 170 °C and low pressure treatment, in particular at a pressure of less than 300 mm Hg.

16. Process for the preparation of the thermoplastic elastomer composition according to claim 14 wherein 0.1 - 20 parts by weight, preferably 0.2 - 10 parts by weight, more preferably 0.25 - 5 parts by weight, in particular 0.5 to 3.5 parts by weight of a phenolic resin cross-linker are present per 100 parts by weight of elastomeric polymer.

17. Process for the preparation of the thermoplastic elastomer composition according to claim 14 wherein the vulcanization is done in the presence of at least one acid, in particular, in the presence of a metal halide, preferably stannous chloride.

18. Process for the preparation of the thermoplastic elastomer composition according to claim 14 wherein the vulcanization is done in the presence of at least one heavy metal oxide, in particular ZnO.

19. An article comprising a thermoplastic composition according to at least one of claims 1 to 13 or produced by a process according to at least one of claims 14 to 15.
